# EUROPEAN PATENT SPECIFICATION

(11) **EP 1 866 137 B1**
(45) Date of publication and mention of the grant of the patent: **01.04.2009**
(21) Application number: 06727535.4
(22) Date of filing: 04.04.2006
(51) Int. Cl.: B29C 45/34, B29C 45/36, B01L 3/14, A61B 5/15, B29L 22/00

(54) **INJECTION MOULDING PROCESS FOR MAKING LABORATORY TEST-TUBES AND MOULD TO BE USED IN THE MOULDING PROCESS THEREOF**
SPRITZGIESSVERFAHREN ZUR HERSTELLUNG VON LABORREAGENZGLÄSERN UND BEIM FORMVERFAHREN DAFÜR EINZUSETZENDE FORM
PROCEDE DE MOULAGE PAR INJECTION DE MATERIAUX PLASTIQUES POUR TUBES A ESSAIS DE LABORATOIRE ET MOULE UTILISE DANS CE PROCEDE DE MOULAGE

(30) Priority: 06.04.2005 IT PD20050091
(43) Date of publication of application: 19.12.2007
(73) Proprietor: Vacutest Kima S.r.l., 35020 Arzergrande (Padova) (IT)
(72) Inventor: CHIARIN, Renzo, I-35020 Arzergrande (Padova) (IT)
(74) Representative: Crippa, Paolo Ernesto
(86) International application number: PCT/IB2006/000990
(87) International publication number: WO 2006/106431

(56) References cited:
- US-A- 2 434 594
- US-A- 4 126 291
- PATENT ABSTRACTS OF JAPAN vol. 016, no. 405 (M-1301), 26 August 1992 (1992-08-26) & JP 04 135820 A (PENTEL KK), 11 May 1992 (1992-05-11) & DATABASE WPI Section Ch, Week 199936 Derwent Publications Ltd., London, GB; Class A32, AN 1992-205180 & JP 02 929692 B2 (PENTEL KK) 3 August 1999 (1999-08-03)
- PATENT ABSTRACTS OF JAPAN vol. 013, no. 500 (M-891), 10 November 1989 (1989-11-10) & JP 01 202417 A (SATO KASEI KOGYOSHO:KK), 15 August 1989 (1989-08-15)

## Description

### Field of application

The present invention refers to a process for the injection moulding of plastic materials to make laboratory test tubes and to a mould usable in such process.

The moulding process and the mould subject of the present invention can be advantageously used in producing test tubes, pipettes and like plastic containers generally for clinical use, and more particularly adapted for use in clinical tests to measure a blood sample's erythrocyte sedimentation rate (ESR).

### Background art

As is known, in the field of chemical analysis of body fluids, particularly by means of automatic analytical tools, there exists the particular need to have test tubes, pipettes or other like containers with containment side walls which are perfectly aligned with the longitudinal extension axis of the test tube itself and have a constant thickness along the entire axis.

This need is particularly important, for example, in the tests for measuring a blood sample's erythrocyte sedimentation rate (ESR). As is known, in fact, the erythrocyte sedimentation process is strongly influenced by the shape of the side walls of the test tube which is used to contain the blood sample to be analysed. In fact, if the test tube has an internal cross-section which is not perfectly constant and, thus, internal walls not perfectly aligned relative to its longitudinal extension axis, the erythrocytes inevitably tend to deposit themselves on the internal walls of the test tube itself, thus slowing their sedimentation movement toward the bottom. The ESR values obtained from measurements carried out in such test tubes shall result, therefore, misrepresented and unreliable.

In the tests for measuring the ESR the need to have test tubes with side walls having a perfectly constant thickness is not connected *per se* to the process of erythrosedimentation, but to the appearance of optical type, automatic measuring tools. These tools are calibrated depending on the thickness of the test tube's side walls, since the measurement they give also depends on the optical path of the reading rays through the walls. Therefore, possible irregularities in the thickness of the walls, by modifying the optical path of the rays, can cause the automatic reading tool to provide measurement values outside the calibration range and therefore unreliable.

As is known, the current processes for the injection moulding of plastic materials do not allow for making laboratory test tubes which have all the constructive peculiarities stated above, that is perfectly vertical side walls and constant thickness along the entire longitudinal extension of the test tubes themselves. Therefore, traditionally, to produce such test tubes, glass has always been used, which, with respect to plastic materials, can be processed with operatively more flexible moulding processes and which is especially capable of providing final products with extreme dimensional tolerances.

The impossibility to use plastic materials in the production of this type of test tubes derives, firstly, from the operative difficulties encountered in keeping the male perfectly aligned and centred within the mould during the moulding process and, secondly, from the difficulties encountered in expelling air from the mould during the injection step of the molten plastic material.

More in detail, the difficulties of centring the male within the mould are a consequence of the fact that the dimensions of the male are bound to those of the test tubes to be made (internal diameter of about 6-7 mm, wall thickness of about 1 mm and length of about 11-12 cm). The male is particularly slender and therefore it is not sufficiently strong and rigid to stand the high moulding pressures requested (in the order of 100 bar) in the case of the moulding of plastic materials without undergoing bending relative to the central axis of the mould. This would inevitably lead to have plastic test tubes with inclined side walls and with non-constant thickness.

This problem is emphasized, moreover, by the fact that, in order to ease the expulsion of all the air present in the mould, the molten plastic material is injected in the mould preferably at the bottom of the test tube. In fact, with an injection from the bottom, the air is pushed toward the mouth of the test tube where it can easily come out without special air-expellers. Therefore, there is the advantage of having a mould which is constructively simple to make and operatively reliable. However, in this way, the injection pressures of higher intensity are exerted just at the free end of the male, that is in the area where the latter is less rigid and is more easily subject to bending.

To limit the bending of the male, the plastic material can be injected in the mould at the mouth or possibly along the longitudinal extension axis of the test tube. With this solution, the injection pressures are exerted in areas where the male is more rigid. However, the air contained inside the mould is pushed, at least partially, in the moulding area corresponding to the bottom of the test tube. Therefore, it necessary to provide, in the mould, a set of expellers to allow the evacuation of the air and prevent it from being trapped as bubbles inside the plastic matrix. In fact, considering the reduced thicknesses of the test tube's walls, the presence of air bubbles could generate micro pores capable of compromising the impermeability of the test tube, which would then become totally unusable.

From an operative point of view, this second solution requires therefore providing a constructively much more complicated mould compared to the one requested for the injection from the bottom. Moreover, this second solution, even though it partially solves the problem of the centring of the male, is quite unreliable. In fact, it is known in the art that the air expellers currently used are frequently obstructed and need a continuous maintenance which is particularly time consuming, which is unaffordable in large scale productions.

Document JP-A-04135820 discloses a process and a mold accordance with the preambles of claims 1 and 14.

### Presentation of the invention

In this situation, therefore, the object of the present invention is to eliminate the drawbacks of the above-mentioned known art, providing an injection moulding process that allows making laboratory test tubes in plastic material with improved characteristics.

A further object of the present invention is to provide a process for the injection moulding which allow making plastic test tubes with perfectly vertical side walls and with a constant thickness along their entire longitudinal extension.

Another object of the present invention is to provide a moulding process that is both cheap and easy to realize.

A further object of the present invention is to provide a mould usable in such moulding process that allows a perfect centring of the male and a complete expulsion of the air without using traditional expellers.

These and other aims are all reached using an injection moulding process and a mould usable in such process according to the appended claims.

### Brief description of the drawings

The technical characteristics of the invention, according to the above-mentioned purposes, can be clearly checked from the content of the following claims and the advantages of the same will be more evident in the detailed description which follows, made in reference to the drawings attached, which represent a merely illustrative and not limiting embodiment thereof, wherein:
- Figure 1 shows a side schematic view of a forming mould according to the invention;
- Figure 2 shows a perspective view of a detail of the mould of Figure 1 concerning the extension of slits for the evacuation of the air according to a preferred embodiment;
- Figures 3 and 3a show a plan view of a detail of the mould of Figure 1 concerning first support base;
- Figure 4 shows a section view of the first support base of Figure 3 along the line IV-IV of the same figure;
- Figure 5 shows a perspective view of the first support base of Figure 4 sectioned along line V-V of Figure 4;
- Figure 6 and 6a show a plan view of a detail of the mould of Figure 1 related to a second support base;
- Figure 7 shows a section view of the second support base of Figure 6 according to the line VII-VII of the same figure;
- Figure 8 shows a perspective view of the second support base of Figure 6 sectioned along the line VIII-VIII of Figure 7;
- Figure 9 shows a perspective view of the first and of the second support base of Figures 5 and 8 in an assembled condition, with some parts removed to better highlight others; and
- Figures 10 and 11 show two perspective views of a detail of the mould of Figure 1 concerning the extension of slits for the evacuation of the air according to two different alternative embodiments.

### Detailed Description

The process for the injection moulding of plastic material, subject of the present invention, can be advantageously used in the production of laboratory test tubes, pipettes and like containers in plastic material, intended in general to clinical use, which require perfectly vertical side walls having a constant thickness along the entire longitudinal extension of the test tubes themselves.

In particular, this moulding process can, therefore, be employed in the production laboratory test tubes in plastic material suitable to be employed in clinical tests to measure a blood sample's erythrocyte sedimentation rate (ESR).

Furthermore, the moulding process, subject of the present invention, allows solving the problem of evacuating the air from the mould without having to use traditional type expellers.

Advantageously, this moulding process can use any plastic material suitable for medical use such as, for example, polyethylene terephthalate (PET), polyethylene (PE), polypropylene (PP), polyvinyl chloride (PVC), polystyrene, and methacrylate.

The first operative step of the process according to the present invention is a step of providing at least one shaped mould 1 for the forming of a laboratory test tube. This mould 1 includes a female element 10 internally hollow and a male element 20 insertable inside the female element 10 to define a suitable forming chamber 2 for a laboratory test tube.

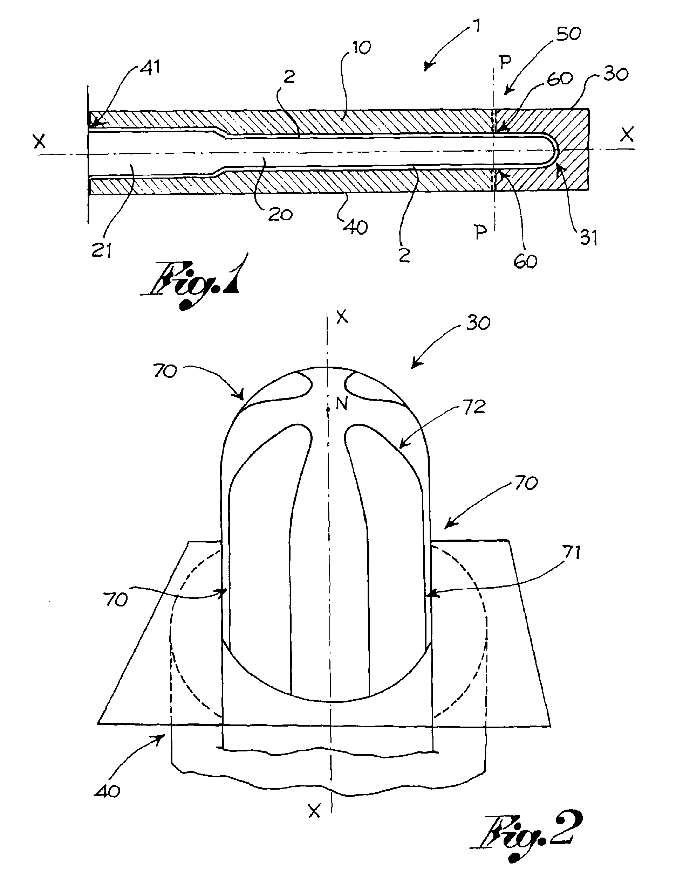

As it can be seen in Figure 1, this forming chamber 2 has a main longitudinal extension along a central axis X. The shape of the forming chamber 2 can be of any type, depending on the needs.

As will be explained further in detail, describing the mould which is subject of present invention, together with the moulding process, the female element 10 includes at least a bottom portion 30, intended to shape the bottom of the test tube, and a head portion 40, intended to shape the main body of the test-tube itself.

More in detail, the bottom portion 30 includes a substantially hemispherical cap 31, while the head portion 40 is provided with an inlet mouth 41, which corresponds to the mouth itself of the test-tube, to allow the insertion of the male element 20.

Following the above-said step of providing the mould, it is foreseen a step of inserting the male element 20 inside the female element 10 along the above-mentioned central axis X.

At this point, the forming chamber 2 is prepared and it is possible then to proceed with an injection step of molten plastic material inside mould 1. In this step, the plastic material, previously melted in an appropriate melting chamber is introduced under pressure in the forming chamber 2 by means of a plurality of injection points 60 made on the female element 10. The melted plastic material fills progressively the forming chamber 2 in a subsequent filling step.

According to an important aspect of the present invention, simultaneously to this filling step, it is foreseen a step of evacuation for the air contained in the forming chamber 2. During this step, the air comes out progressively from the mould 1 through a plurality of slits 70 made on the female element 10 under the pressure of the molten plastic material that progressively fills the forming chamber 2.

As will be further described in detail, these slits 70 have dimensions such as to allow the airflow and to block, at the same time, the emission of molten plastic material from the forming chamber 2. Such slits 70 are provided at different heights along the above-mentioned central axis X, so as to allow a progressive airflow of the air from the mould as the molten plastic material fills the forming chamber 2.

After the solidification of the plastic material, it is foreseen an extraction step of the male element 20 from the female element 10 and, therefore, a removal step of the test tube from the mould 1.

Advantageously, during the above-mentioned injection step, the melted plastic material is introduced under pressure inside the forming chamber 2 through side injection points 60. The various side injection points 60 are made in the female element 10 in a intermediate section 50 comprised between the inlet mouth 41 and the bottom portion 30 and can be coplanar lying on a same plane p substantially orthogonal relative to the above-mentioned central axis X, or they can lie on more parallel planes p substantially orthogonal relative to the above-mentioned central axis X. Preferably, the injection points 60 are made between the bottom portion 30 and the head portion 40.

According to a first embodiment, the side injection points 60 are made as pairs of opposite points with respect to the central axis X. Each pair's injection points lie substantially on the same orthogonal plane p. Preferably, all the injection points are made on the same orthogonal plane p.

According to a second embodiment, the side injection points 60 are radially distributed with respect to the central axis X at regular angular distances. For example, 3 injection points can be provided, mutually distributed with an angular distance of about 120°.

Preferably, the side injection points 60, irrespective of how they are distributed inside the female element 10, are defined by nozzles orthogonally oriented with respect to said central axis X, to allow the molten plastic material to enter under pressure the forming chamber 2 during the injection step according to injection directions Y orthogonal relative to the central axis X. Thanks to this distribution of the nozzles, the male element 20 is subjected to an overall balanced system of forces which provides for a perfect centring of the male element 20 itself along the above-mentioned central axis X during the moulding of the test tube.

In accordance with alternative embodiments, the centring of the male element 20 can also be obtained by orienting the nozzles of the side injection points 60 at angles which are non-right with respect to the central axis X. In this case, the nozzles are not coplanar with the plans p in which the various injection points 60 lie, but they lie on inclined planes. These alternative solutions, however, even though they allow centring of the male, have the disadvantage of originating a not perfectly homogenous injection of the melted plastic material inside the forming chamber 2.

Advantageously, thanks to the above-mentioned even distribution of the injection points 60, either equidistanced or in pairs of opposed points, during the filling step, the male element 20 is kept centred inside of the female element 10 and aligned to the central axis X of the forming chamber 2 by the uniformly distributed pressure of the melted plastic material introduced inside the forming chamber 2 through the above-mentioned injection points 60.

Advantageously, the above-mentioned slits 70 can extend themselves for the entire longitudinal extension of the female element 20 along the central axis X as well as limit themselves to some segments, provided that at least the bottom portion 30 is covered.

In fact, during the evacuation step, the air contained inside the forming chamber 2 in the segment comprised between the inlet mouth 41 and the intermediate section 50 in which the injection points 60 are made, tends naturally to come out from the mould 1 at the inlet mouth itself. Therefore, in this segment of the forming chamber 2 the slits 70, though facilitating the evacuation of the air, can also not be present. On the other hand, the air contained inside the forming chamber 2, in the segment comprised between the above-mentioned intermediate section 50 and the bottom portion 30, cannot come out from the inlet mouth 41, the passage being obstructed by the melted plastic material, and has as a single escape route only the slits 70.

In accordance with a preferred embodiment, each of the above-mentioned slits 70 extends with a first segment 71 starting from the intermediate section 50 in which the injection points 60 are made, to proceed then with a second segment 72 in the cap 31 of the bottom portion 30. Preferably, the first segment 71 is substantially rectilinear and parallel to the central axis X and continuously connects with the second segment 72, which is substantially curvilinear and converging toward the N pole of the cap 31, to form a continuous slit.

In accordance with an alternative embodiment not illustrated in the attached figures, each slit 70 can have a substantially circular form, coaxial to the central axis X. The slits lie on several parallel planes located at different heights relative to the central axis X starting form the cap 31 toward the inlet mouth 41 to get at least near the intermediate section 50 where the injection points 60 are made.

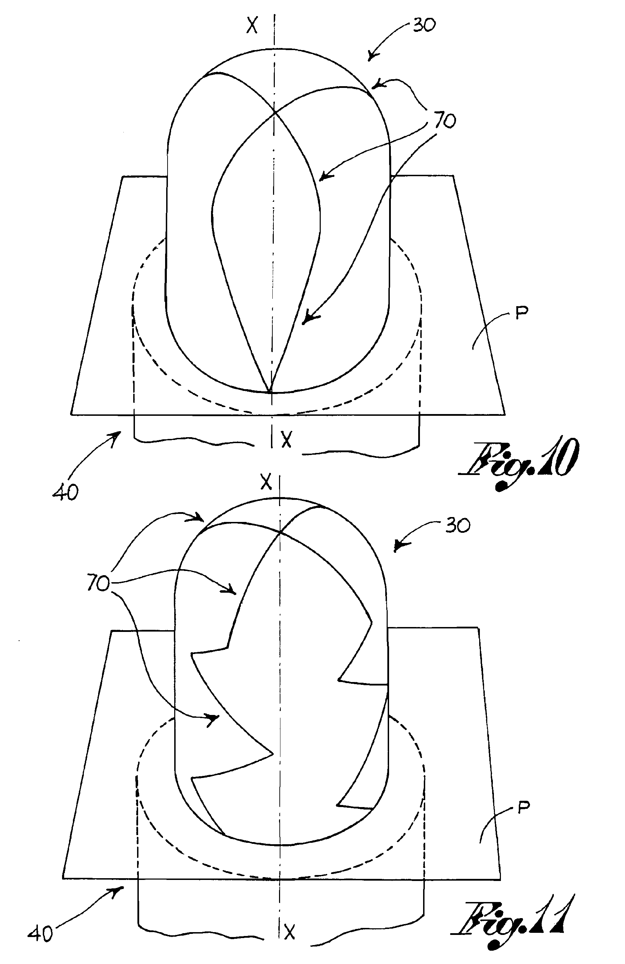

The protective scope of this patent is not limited to the shapes of the slits 70 just described, but it extends to any shape useful to carry out the role of these slits 70, that is to progressively expel the air during the filling step of the mould 1. In fact, for example, there can be foreseen slits 70 which intersect, which follow a broken or inclined line with respect to the central axis X or which have a wavy pattern. In Figures 10 and 11 some alternative solutions are shown for the forming of the slits 70, with oblique lines and broken lines, respectively.

As already mentioned before, also an object of the present invention is a mould for the forming of laboratory test tubes by injection of plastic material, usable especially in the moulding process just described.

The basic characteristics of this mould have already been anticipated by describing the moulding process, subject of the present invention. With reference to the attached figures, a preferred embodiment of such mould will be described, therefore, keeping the numeral references already used before.

As it can be observed in Figure 1, the male element 20 of the mould 1, consists of a tubular body having a main longitudinal extension along the above-mentioned central axis X. The male element 20 is connected to a first support structure (not shown) at its base portion 21. Preferably, at this base portion 21, the male element 20 shows an increased cross-section such that the bending resistance along the central axis is increased.

The female element 10 is housed inside a second support structure (not shown) inside of which a series of heated injection channels 80 are made, which communicate with the side injection points 60 to convey the melted plastic material from one melting chamber (not shown) to the forming chamber 2.

More in detail, the female element 10 consists of two distinct hollow bodies, which are assembled before the moulding to define the test tube's external extension surface. A first hollow body corresponds to the above-mentioned head portion 40 and defines the shape of the test tube for the segment extending from the mouth of the test tube itself to the end of the graduated area, while the second hollow body corresponds to the above-mentioned bottom portion 30 and defines the shape of the test tube for the segment extending from the end of the graduated area to the bottom.

As it can be seen in Figure 1 the interface area between these two hollow bodies 30 and 40 of the female element 10 defines the above-mentioned intermediate section 50 where the side injection points 60 lie and is defined by a plane p orthogonal to the central axis X. Preferably, this plane p is located immediately below the test tube's graduated reading area so to avoid that the graduated area is deteriorated by the presence of the traces of the injection points.

As already mentioned before, according to alternative solutions not shown, the injection points 60 can lie on different planes orthogonal to the central axis X. In this case, the interface area between these two hollow bodies 30 and 40 of the female element 10 is no longer a single substantially flat surface but it is rather a surface with steps (straight or ramp shaped) defined by the various orthogonal plans to the central axis X (parallel to each other) in which the injection points lie.

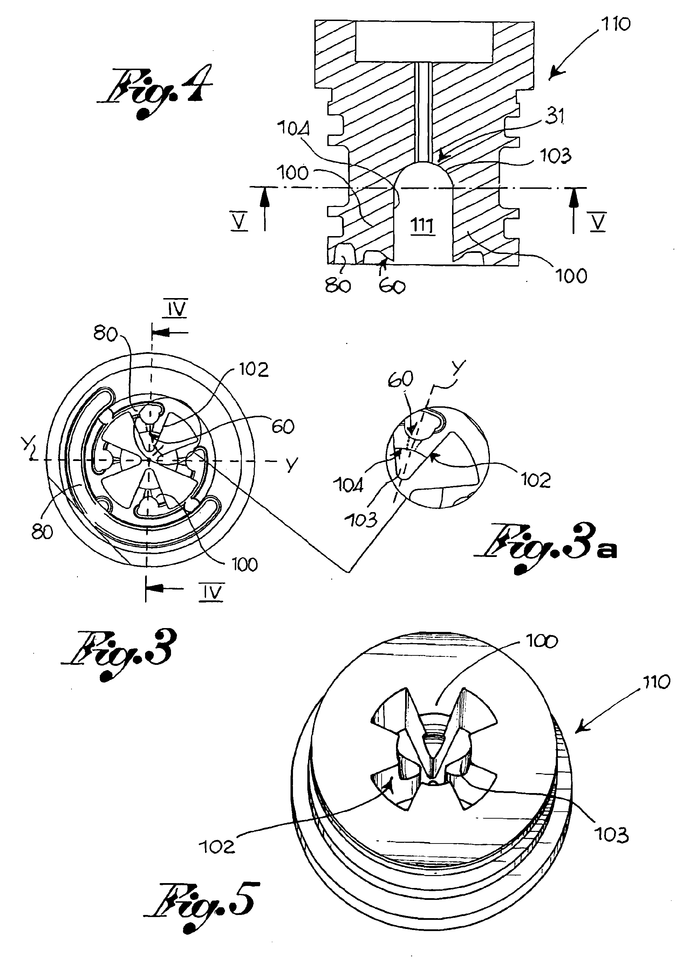

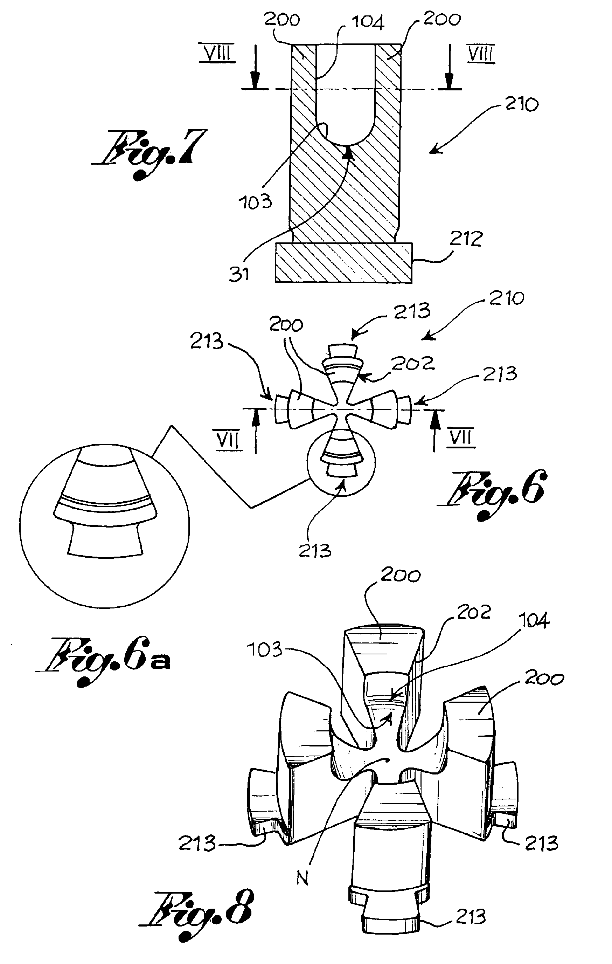

In accordance with the preferred embodiment shown, particularly in Figures 5 and 8, the bottom portion 30 of the female element 10 is formed by a first and a second series of sections 100 and 200, which are connected to a first and a second support base 110 and 210, respectively. These bases, analogously to the two series of sections, are suitably shaped so to be mutually fit coupled thus forming a single body.

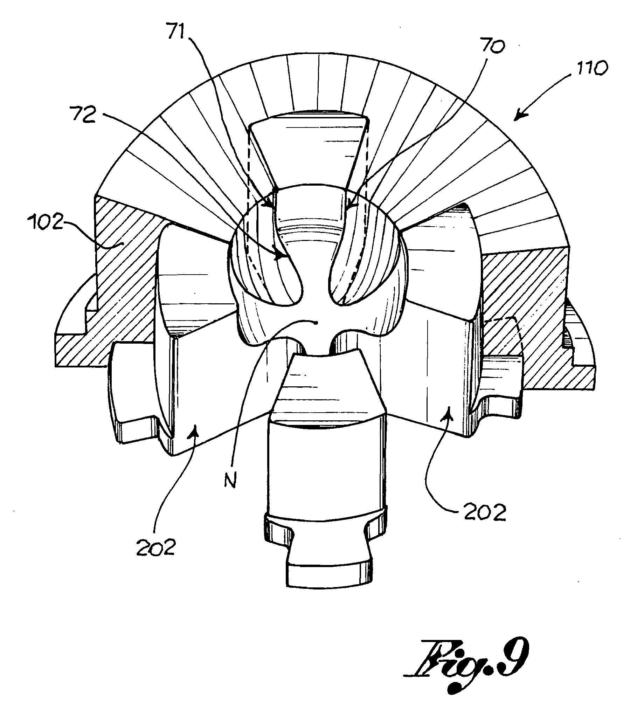

As it can be observed in Figure 9, when the two support bases 110 and 210 are coupled, the sections 100 of the first series alternate with the sections 200 of the second series.

As it can be observed in particular in Figures 4 and 5, the first support base 110 consists of a cylindrical body, which is coaxially provided with an internal shaped cavity 111. Inside this cavity 11, four sections 100, having a main longitudinal extension parallel to the central axis X, radially project. Each section is shaped so as to show a concave part 103, which defines the corresponding sector of the hemispherical cap 31 and converges toward the latter's N pole, and a substantially flat part 104, which extends parallel to the central axis X up to the orthogonal plane p wherein the injection points 60 lie, to define the corresponding sector of the bottom portion 30 which connects to the head portion 40.

As can be observed in Figure 8, the second support base 210 consists of a flat body 213 from where four arms 212 project radially at 90°. From each arm a section 200 extends parallel to the central axis X. The four sections 200 connect to each other at the pole N of the hemispherical cap 31. The shape of the sections 200 of the second series is substantially similar to the one of the sections 100 of the first series.

The interface surfaces between the sections of the two series 100 and 200 define the slits 70 for the evacuation of the air. Preferably, each slit 70 extends transversally to the central axis X with an air gap L comprised in the range between 0.005 and 0.02 mm and is defined by two opposite flat walls 102 and 202, belonging to two sections of the two series 100 and 200 respectively. Preferably, these walls have a surface roughness defined as Ra in the range between 0.4 10-6 m and 6.3 10-6 m. This surface roughness defines, between the two walls, a thick network of micro channels that allow the free passing of the air, though preventing, at the same time, the leaking of melted plastic material.

In accordance with this preferred embodiment, there are eight slits 70 for the evacuation of the air which follow the profile of the sections of the two series 100 and 200. The first segment 71 of each slit follows the edge of the flat part 104 of the sections, while the second segment 72 follows the edge of the concave part 103 of the sections. The extension of these slits 70 can be appreciated in the Figure 2, wherein for the sake of clarity, only the surface extension of the bottom portion 30 is shown without illustrating the real thickness of the external containment walls.

The overall extension of the slits 70 thus defined, allows to obtain large active evacuation surfaces and difficult to obtain by using, instead, traditional type expellers. In fact, for a mould 1 according to the invention in which the distance between the pole N of the cap 31 and the plane p of the injection points has been established to be equal to about 15 mm, the overall evacuation surface provided by the 8 slits is 2.4 mm², considering, for each slit, an air gap L of 0.02 mm. This surface is equal to the one of a circular hole having a diameter of about 1.76 mm.

Traditionally, an evacuation surface of these sizes can be realised only by providing in the bottom of the mould a high (and constructively impossible) number of expellers, with the disadvantage of not having a distributed evacuation surface, but a surface in any case concentrated in a few points.

As it can be observed in detail in the Figures 3 and 3a, the injection points 60 are made in the first support base 110, at each of the sections 100 of the first series. The injection points 60 are four, radially arranged relative to the central axis X and spaced angularly at 90° degrees the one from the other so as to result opposite in pairs. The injection points 60 are defined by nozzles orthogonally oriented relative to the central axis X to allow the plastic material to enter the forming chamber 2 according to directions Y of injection orthogonal to the central axis X and to allow, thus, the centring of the male element 20 inside the female element 10.

More in detail, as can be observed in Figure 3, the melted plastic material is conveyed to the various nozzles through a network of injection channels 80 which branch out from a delivery collector (not illustrated) by means of a series of bifurcations. This constructive solution allows the achievement of a balanced injection thus obtaining the same injection pressure in each nozzle.

## Claims

1. Injection moulding process of the plastic material for making laboratory test tubes comprising the following operating steps:
- a step of prearranging at least one mould (1) which defines, by means of an external female element (10) and an internal male element (20), a forming chamber (2) for a test tube, said chamber (2) having a main longitudinal extension along a second central axis (X), said female element (10) comprising a bottom portion (30) and a head portion (40) inside of which an inlet mouth (41) is made for said male element (20);
- a step of inserting said male element (20) inside said female element (10) along said central axis(X);
- a step of injection wherein said melted plastic material is placed under pressure inside said forming chamber (2) through a multiplicity of injection points (60) made on said female element (10);
- a filling step, wherein said plastic material progressively fills said moulding chamber (2) to obtain said test tube;
- an evacuation step, simultaneous with said filling phase,
- a step of extraction of said male element (20) from said female element (10);
- a step of removal of said test tube from said mould (1) **characterized in that** in the evacuation step the air contained in said forming chamber (2) progressively exits said mould (1) under the pressure of said plastic material through a plurality of slits (70) made on said female element (10) at different heights along said central axis (X), said slits (70) having dimensions such to permit the passage of the air and at the same time to block the emission of said melted plastic material from said forming chamber (2).

2. Moulding process according to claim 1, wherein during said injection step said melted plastic material is introduced under pressure inside said forming chamber (2) through side injection points (60), which lie on one or more planes substantially orthogonal (p) to said central axe (X) in an intermediate section (50) of said female element (10) comprised between said inlet mouth (41) and said bottom portion (30).

3. Moulding process according to claim 2, wherein said side injection points (60) are made between said bottom portion (30) and said head portion (40).

4. Moulding process according to claim 2 or 3, wherein said side injection points (60) are made on said female element (10) in pairs of opposite points with respect to said central axis (X), the two opposite injection points of each pair substantially lying on the same orthogonal plane (p).

5. Moulding process according to claim 2 or 3, wherein said injection points (60) are distributed radially with respect to said central axis (X) at regular angular distances.

6. Moulding process according to any one of the claims from 2 to 5, wherein said side injection points are defined by nozzles oriented orthogonally with respect to said central axis (X) to permit said melted plastic material during said injection phase to enter inside said forming chamber (2) under pressure and along injection directions (Y) which are orthogonal with respect to said central axis (X).

7. Moulding process according to any one of the claims from 2 to 6, wherein said male element (20) is kept centred inside said female element (10) and aligned with respect to said central axis (X) by said melted plastic material introduced under pressure inside said forming chamber (2) through said side injection points (60).

8. Process according to any one of the preceding claims, wherein each of said slits (70) shows at least a first substantially rectilinear segment (71) which is parallel to said central axis (X).

9. Process according to claim 8, wherein said bottom portion (30) comprises a substantially hemispherical cap (31) and wherein each of said slits (70) extends at said cap (31) with a second curvilinear segment (71) converging towards the (N) pole of said cap (31).

10. Moulding process according to claims 2 and 9, wherein each of said slits (70) extends beginning from the cap (31) of said bottom portion (30) with said second segment (72) to proceed towards said inlet mouth (41) with said first segment (71) at least until near said intermediate section (50) where said injection points (60) are made, said second segment (72) being continuously connected to said first segment (71) to form a continuous slit.

11. Moulding process according to claim 2, wherein each of said slits (70) has a substantially circular form, coaxial with respect to said central axis (X), said slits lying on parallel planes placed at different heights with respect to said central axis (X) starting from said cap (31) towards said inlet mouth (41) until arriving at least in proximity with said intermediate section (50).

12. Moulding process according to claim 10 or 11, wherein during said evacuation step the air contained inside said forming chamber (2) between said intermediate section (50) and said inlet mouth (41) exits said mould (1) mainly at mouth (41), while the air contained inside the said forming chamber (2) between said intermediate section (50) and said cap (31) progressively exits from said mould (1) through said slits (70).

13. Moulding process according to any one of the preceding claims, wherein said plastic material is chosen in the group comprising polyethylene terephthalate (PET), polyethylene (PE), polypropylene (PP), polyvinyl chloride (PVC), polystyrene and methacrylate.

14. Mould for the forming of laboratory test tubes by means of injection of melted plastic material, usable in particular in the moulding process according to any one of the preceding claims, comprising:
- a forming chamber (2) defined by an external female element (10) and an internal male element (20), said chamber (2) having a main extension along a central axis (X), said female element (10) being provided with several side injection points (60) for said melted plastic material and comprising a bottom portion (30) and a head portion (40), wherein an inlet mouth (41) has been made for said male element (20);
- a plurality of injection channels (80) made on the female element (10) outside said forming chamber (2), which communicate with said injection points (60) to convey said melted plastic material from a melting chamber to said forming chamber (2);
**characterized in that** said female element (20) is provided with a plurality of slits (70) adapted to permit the exit of the air contained in the forming chamber (2) under the pressure of the melted plastic material, said slits (70) being arranged at different heights along said central axis (X) and having dimensions such to permit the passage of the air and at the same time block the emission of said melted plastic material from said mould (1).

15. Mould according to claim 14, wherein each of said slits (70) has an opening (L) comprised between 0.005 and 0.02 mm and is defined by two opposite walls (102; 202) having a surface roughness defined as Rₐ comprised between 0.4 x 10⁻⁶ m and 6.3 x 10⁻⁶ m.

16. Mould according to claim 14 or 15, wherein said side injection points (60) lie on one or more planes substantially orthogonal (p) with respect to said central axis (X) in an intermediate section (50) of said female element (10) comprised between said inlet mouth (41) and said bottom portion (30).

17. Mould according to claim 16, wherein said side injection points (60) are made from said bottom portion (30) and said head portion (40).

18. Mould according to claim 16 or 17, wherein said side injection points (60) are made on said female element (10) as pairs of points, opposite with respect to said central axis (X), the two opposite injection points of each pair substantially lying on the same orthogonal plane (p).

19. Mould according to claim 16 or 17, wherein said injection points (60) are arranged radially with respect to said central axis (X) at regular angular distances.

20. Mould according to any one of the claims from 14 to 19, wherein said injection points (60) are defined by nozzles oriented orthogonally with respect to said central axis (X) to permit said plastic material to enter inside said forming chamber (2) along injection directions (Y) which are orthogonal to said central axis (X) and thus to permit the centring of said male element (20) inside said female element (10).

21. Mould according to any one of the claims from 14 to 20, in which each of said slits (70) extends between said bottom portion (30) and said head portion (40) with at least a first segment (71) substantially rectilinear and parallel with respect to said central axis (X).

22. Mould according to claim 21, wherein said bottom portion (30) comprises a substantially hemispherical cap (31) and wherein each of said slits (70) extends at said cap (31) with a second curvilinear segment (72) converging towards the (N) pole of said cap (31).

23. Mould according to claims 16 and 22, wherein each of said slits (70) extends starting from said cap (31) with said second segment (72) to proceed towards said inlet mouth (41) with said first segment (71) until at least in proximity with said intermediate section (50), said second segment (72) being continuously connected to said first segment (71) to form a continuous slit.

24. Mould according to any one of the claims from 14 to 20, wherein each of said slits (70) has a substantially circular form, coaxial with respect to said central axis (X), said slits (70) lying on parallel planes placed at different heights with respect to said central axis (X) beginning from said cap (31) towards said inlet mouth (41).

25. Mould according to any one of the claims from 14 to 23, wherein said bottom portion (30) is formed by at least a first (100) and a second (200) series of sections connected respectively to a first (110) and to a second (210) counter-shaped support base to permit a mutual coupling, the sections (101) of said first series alternating with said wedges (201) of said second series, said slits (70) being defined in the interface zones between the sections (100) of said first series and the sections (200) of said second series.

## Patentansprüche

1. Spritzgießverfahren für Kunststoffmaterial zum Herstellen von Laborreagenz-gläsern, umfassend die folgenden Betriebsschritte:
- einen Schritt des vorherigen Anordnens zumindest einer Form (1), die mit-tels eines externen aufnehmenden Elements (10) und eines internen aufzu-nehmenden Elements (20) eine Formkammer (2) für ein Reagenzglas defi-niert, wobei die Kammer (2) eine Längserstreckung bzw. verlängerung ent-lang einer zweiten zentralen Achse (X) aufweist, wobei das aufnehmende Element (10) einen Bodenabschnitt (30) und einen Kopfabschnitt (40) umfasst, innerhalb dessen ein Einlassmund (41) für das aufzunehmende Ele-ment (20) gemacht ist;
- einen Schritt des Einsetzens des aufzunehmenden Elements (20) in das aufnehmende Element (10) entlang der zentralen Achse (X);
- einen Schritt des Einspritzens, bei dem das geschmolzene Kunststoffmate-rial unter Druck im Inneren der Formkammer (2) durch eine Vielzahl von Einspritzpunkten (60) platziert wird, die an dem aufnehmenden Element (10) gemacht sind;
- einen Füllschritt, bei dem das Kunststoffmaterial fortlaufend die Formkam-mer (2) füllt, um das Reagenzglas zu erhalten;
- einen Entleerungsschritt simultan mit der Füllphase;
- einen Schritt des Herausziehens des aufzunehmenden Elements (20) aus dem aufnehmenden Element (10);
- einen Schritt des Entfernens des Reagenzglases aus der Form (1);
**dadurch gekennzeichnet, dass** in dem Entleerungsschritt die Luft, die in der Form-kammer (2) enthalten ist, fortlaufend aus der Form (1) unter dem Druck des Kunststoffmaterials durch eine Mehrzahl von Schlitzen (70) austritt, die an dem aufnehmenden Element (10) an unterschiedlichen Höhen entlang der zentralen Achse (X) gemacht sind, wobei die Schlitze (70) solche Abmessun-gen aufweisen, um den Durchtritt der Luft zu erlauben und gleichzeitig den Ausstoß des geschmolzenen Kunststoffmaterials aus der Formkammer (2) zu blockieren.

2. Gießverfahren nach Anspruch 1, wobei während des Einspritzschritts das ge-schmolzene Kunststoffmaterial unter Druck in die Formkammer (2) durch Seiteneinspritzpunkte (60) eingebracht wird, die auf einer oder mehreren Ebenen im Wesentlichen orthogonal (p) zu der zentralen Achse (X) in einer Zwischen-sektion (50) des aufnehmenden Elements (10) liegen, der bzw. das zwischen dem Einlassmund (41) und dem Bodenabschnitt (30) enthalten ist.

3. Gießverfahren nach Anspruch 2, wobei die Seiteneinspritzpunkte (60) zwi-schen dem Bodenabschnitt (30) und dem Kopfabschnitt (40) gemacht sind.

4. Gießverfahren nach Anspruch 2 oder 3, wobei die Seiteneinspritzpunkte (60) an dem aufnehmenden Element (10) in Paaren gegenüberliegender bzw. ent-gegengesetzter Punkte bezüglich der zentralen Achse (X) gemacht sind, wo-bei die zwei gegenüberliegenden bzw. entgegengesetzten Einspritzpunkte je-des Paars im Wesentlichen auf derselben orthogonalen Ebene (p) liegen.

5. Gießverfahren nach Anspruch 2 oder 3, wobei die Seiteneinspritzpunkte (60) radial bezüglich der zentralen Achse (X) in regelmäßigen Winkelabständen verteilt sind.

6. Gießverfahren nach einem der Ansprüche 2 bis 5, wobei die Seiteneinspritz-punkte durch Düsen definiert sind, die orthogonal bezüglich der zentralen Achse (X), um dem geschmolzenen Kunststoffmaterial während der Einspritz-phase zu erlauben, unter Druck in die Formkammer (2) zu gelangen, und ent-lang den Einspritzrichtungen (Y) ausgerichtet sind, die orthogonal bezüglich der zentralen Achse (X) sind.

7. Gießverfahren nach einem der Ansprüche 2 bis 6, wobei das aufzunehmende Element (20) zentriert innerhalb des aufnehmenden Elements (10) gehalten wird und bezüglich der zentralen Achse (X) durch das geschmolzene Kunst-stoffmaterial ausgerichtet wird, das unter Druck in die Formkammer (2) durch die Seiteneinspritzpunkte (60) eingebracht wird.

8. Verfahren nach einem der vorhergehenden Ansprüche, wobei jeder der Schlit-ze (70) zumindest ein erstes im Wesentlichen geradliniges Segment (71) zeigt bzw. darstellt, das parallel zu der zentralen Achse (X) ist.

9. Verfahren nach Anspruch 8, wobei der Bodenabschnitt (30) eine im Wesentli-chen halbkugelförmige Kappe (31) umfasst und wobei sich jeder der Schlitze (70) an der Kappe (31) mit einem zweiten krummlinigen Segment (71) er-streckt, das zu dem (N)-Pol der Kappe (31) hin konvergiert.

10. Gießverfahren nach Anspruch 2 und 9, wobei sich jeder der Schlitze (70) be-ginnend von der Kappe (31) des Bodenabschnitts (30) mit dem zweiten Seg-ment (72) zu dem Einlassmund (41) hin mit dem ersten Segment (71) zumindest soweit erstreckt, bis er bzw. sie nahe der Zwischensektion (50) ist bzw. sind, an dem die Einspritzpunkte (60) gemacht sind, wobei das zweite Segment (72) kontinuierlich bzw. durchgängig mit dem ersten Segment (71) ver-bunden ist, um einen kontinuierlichen bzw. durchgängigen Schlitz zu bilden.

11. Gießverfahren nach Anspruch 2, wobei jeder der Schlitze (70) eine im We-sentlichen kreisrunde Form aufweist, und zwar koaxial bezüglich der zentralen Achse (X), wobei die Schlitze auf parallelen Ebenen liegen, die auf unter-schiedlichen Höhen bezüglich der zentralen Achse (X) platziert sind, und zwar beginnend von der Kappe (31) zu dem Einlassmund (41) hin, bis sie zumindest in der Nähe der Zwischensektion (50) ankommen.

12. Gießverfahren nach Anspruch 10 oder 11, wobei während des Entleerungs-schritts die Luft, die in der Formkammer (2) zwischen der Zwischensektion (50) und dem Einlassmund (41) enthalten ist, hauptsächlich an dem Mund (41) aus der Form (1) austritt, während die Luft, die in der Formkammer (2) zwi-schen der Zwischensektion (50) und der Kappe (31) enthalten ist, fortlaufend durch die Schlitze (70) aus der Form (1) austritt.

13. Gießverfahren nach einem der vorhergehenden Ansprüche, wobei das Kunst-stoffmaterial aus der Gruppe bestehend aus Polyethylenterephthalat (PET), Polyethylen (PE), Polypropylen (PP), Polyvinylchlorid (PVC), Polystyrol bzw. Polystyren und Methacrylat ausgewählt ist.

14. Form zu Formen von Laborreagenzgläsern mittels Einspritzen von geschmol-zenem Kunststoffmaterial, die insbesondere in dem Gießverfahren nach ei-nem der vorhergehenden Ansprüche verwendbar ist, umfassend:
- eine Formkammer (2), die durch ein externes aufnehmendes Element (10) und ein internes aufzunehmendes Element (20) definiert ist, wobei die Kammer (2) eine Haupterstreckung bzw. -verlängerung entlang einer zentralen Achse (X) aufweist, wobei das aufnehmende Element (10) mit mehre-ren Seiteneinspritzpunkten (60) für das geschmolzene Kunststoffmaterial versehen ist und einen Bodenabschnitt (30) und einen Kopfabschnitt (40) umfasst, wobei ein Einlassmund (41) für das aufzunehmende Element (20) gemacht ist;
- eine Mehrzahl von Einspritzkanälen (80), die an dem aufnehmenden Ele-ment (10) außerhalb der Formkammer (2) gemacht sind, die mit den Ein-spritzpunkten (60) in Kommunikation bzw. Verbindung stehen, um das geschmolzene Kunststoffmaterial von einer Schmelzkammer zu der Form-kammer (2) zu befördern;
**dadurch gekennzeichnet, dass** das aufnehmende Element (20) mit einer Mehrzahl von Schlitzen (70) versehen ist, die angepasst sind, das Austreten der Luft, die in der Formkammer (2) enthalten ist, unter dem Druck des geschmolzenen Kunststoffmaterials zu erlauben, wobei die Schlitze (70) an unterschiedlichen Höhen entlang der zentralen Achse (X) angeordnet sind und solche Abmessungen aufweisen, um den Durchtritt der Luft zu erlauben und gleichzeitig den Ausstoß des geschmolzenen Kunststoffmaterials aus der Form (1) zu blockie-ren.

15. Form nach Anspruch 14, wobei jeder der Schlitze (70) eine Öffnung (L) auf-weist, die zwischen 0,005 und 0,02 mm beträgt, und durch zwei gegenüberlie-gende bzw. entgegengesetzte Wände (102; 202) definiert ist, die eine als Ra definierte Oberflächenrauhigkeit zwischen 0,4 x 10⁻⁶ m und 6,3 x 10⁻⁶ m auf-weisen.

16. Form nach Anspruch 14 oder 15, wobei die Seiteneinspritzpunkte (60) auf ei-ner oder mehreren Ebenen im Wesentlichen orthogonal (p) bezüglich der zentralen Achse (X) in einer Zwischensektion (50) des aufnehmenden Ele-ments (10) liegen, der bzw. das zwischen dem Einlassmund (41) und dem Bodenabschnitt (30) enthalten ist.

17. Form nach Anspruch 16, wobei die Seiteneinspritzpunkte (60) aus dem Bo-denabschnitt (30) und dem Kopfabschnitt (40) gemacht sind.

18. Form nach Anspruch 16 oder 17, wobei die Seiteneinspritzpunkte (60) an dem aufnehmenden Element (10) als Paare von Punkten gemacht sind, und zwar gegenüberliegend bzw. entgegengesetzt bezüglich der zentralen Achse (X), wobei die zwei gegenüberliegenden bzw. entgegengesetzten Einspritzpunkte jedes Paars im Wesentlichen auf derselben orthogonalen Ebene (p) liegen.

19. Form nach Anspruch 16 oder 17, wobei die Einspritzpunkte (60) radial bezüg-lich der zentralen Achse (X) in regelmäßigen Winkelabständen angeordnet sind.

20. Form nach einem der Ansprüche 14 bis 19, wobei die Einspritzpunkte (60) durch Düsen definiert sind, die orthogonal bezüglich der zentralen Achse (X) ausgerichtet sind, um dem Kunststoffmaterial zu erlauben, entlang Einspritz-richtungen (Y), die orthogonal zu der zentralen Achse (X) sind, in die Form-kammer (2) zu gelangen, und somit das Zentrieren des aufzunehmenden E-lements (20) innerhalb des aufnehmenden Elements (10) zu erlauben.

21. Form nach einem der Ansprüche 14 bis 20, bei der sich jeder der Schlitze (70) zwischen dem Bodenabschnitt (30) und dem Kopfabschnitt (40) mit zumindest einem ersten Segment (71) im Wesentlichen geradlinig und parallel bezüglich der zentralen Achse (X) erstreckt.

22. Form nach Anspruch 21, wobei der Bodenabschnitt (30) eine im Wesentlichen halbkugelförmige Kappe (31) umfasst und wobei sich jeder der Schlitze (70) an der Kappe (31) mit einem zweiten krummlinigen Segment (72) erstreckt, das zu dem (N)-Pol der Kappe (31) hin konvergiert.

23. Form nach Anspruch 16 und 22, wobei sich jeder der Schlitze (70) beginnend von der Kappe (31) mit dem zweiten Segment (72) zu dem Einlassmund (41) hin mit dem ersten Segment (71) zumindest soweit erstreckt, bis er bzw. sie nahe der Zwischensektion (50) ist bzw. sind, wobei das zweite Segment (72) kontinuierlich bzw. durchgängig mit dem ersten Segment (71) verbunden ist, um einen kontinuierlichen bzw. durchgängigen Schlitz zu bilden.

24. Form nach einem der Ansprüche 14 bis 20, wobei jeder der Schlitze (70) eine im Wesentlichen kreisrunde Form aufweist, und zwar koaxial bezüglich der zentralen Achse (X), wobei die Schlitze auf parallelen Ebenen liegen, die auf unterschiedlichen Höhen bezüglich der zentralen Achse (X) platziert sind, und zwar beginnend von der Kappe (31) zu dem Einlassmund (41) hin.

25. Form nach einem der Ansprüche 14 bis 23, wobei der Bodenabschnitt (30) durch zumindest eine erste (100) und eine zweite (200) Reihe bzw. Serie von Sektionen gebildet ist, die mit einer ersten (110) bzw. einer zweiten (210) ge-gengleich bzw. gegensätzlich geformten Träger- bzw. Stützbasis verbunden sind, um eine gegenseitige Kopplung zu erlauben, wobei die Sektionen (101) der ersten Reihe mit den Keilen (201) der zweiten Reihe abwechseln, wobei die Schlitze (70) in den Grenz- bzw. Trennzonen zwischen den Sektionen (100) der ersten Reihe und den Sektionen (200) der zweiten Reihe definiert sind.

## Revendications

1. Procédé de moulage par injection de matériau plastique pour la fabrication de tubes à essais de laboratoire comprenant :
- une étape de fourniture d'au moins un moule (1) qui forme, à l'aide d'un élément femelle extérieur (10) et d'un élément mâle intérieur (20), une chambre (2) de formage pour tube à essais, ladite chambre (2) possédant une extension longitudinale principale le long d'un deuxième axe central (X), ledit élément femelle (10) comprenant une partie inférieure (30) et une partie supérieure (40) à l'intérieur de laquelle un orifice (41) d'admission est conçu pour ledit élément mâle (20) ;
- une étape d'introduction dudit élément mâle (20) à l'intérieur dudit élément femelle (10) le long dudit axe central (X) ;
- une étape d'injection, dans laquelle ledit matériau plastique fondu est placé sous pression dans ladite chambre de formage (2) à travers une multiplicité de points (60) d'injection réalisés sur ledit élément femelle ;
- une étape de remplissage, dans laquelle le matériau plastique progressivement remplit ladite chambre (2) de moulage pour obtenir ledit tube à essais ;
- une étape d'évacuation, simultanément à ladite phase de remplissage ;
- une étape d'extraction dudit élément mâle (20) dudit élément femelle (10) ;
- une étape de retrait dudit tube à essais dudit moule (1), **caractérisé en ce que** lors de l'étape d'évacuation, l'air contenu dans ladite chambre (2) de formage s'échappe progressivement dudit moule (1), sous la pression dudit matériau plastique, à travers une pluralité de fentes (70) pratiquées dans ledit élément femelle (10) à différentes hauteurs le long dudit axe central (X), les dimensions desdites fentes (70) permettant à la fois le passage de l'air et le blocage de l'émission dudit matériau plastique fondu en provenance de ladite chambre (2) de formage.

2. Procédé de moulage selon la revendication 1, dans lequel lors de ladite étape d'injection, ledit matériau plastique fondu est introduit sous pression dans ladite chambre (2) de formage à travers des points (60) d'injection latéraux, qui se trouvent sur un ou plusieurs plans sensiblement orthogonaux (p) audit axe central (X) dans une section intermédiaire (50) dudit élément femelle (10) compris entre ledit orifice (41) d'admission et ladite partie inférieure (30).

3. Procédé de moulage selon la revendication 2, dans lequel lesdits points (60) d'injection latéraux sont réalisés entre ladite partie inférieure (30) et ladite partie supérieure (40).

4. Procédé de moulage selon la revendication 2 ou 3, dans lequel lesdits points (60) d'injection latéraux sont réalisés sur ledit élément femelle (10) par paires de points opposés par rapport audit axe central (X), les deux points d'injection opposés de chaque paire se trouvant sensiblement sur le même plan orthogonal (p).

5. Procédé de moulage selon la revendication 2 ou 3, dans lequel lesdits points (60) d'injection sont répartis de manière radiale par rapport audit axe central (X) à des distances angulaires régulières.

6. Procédé de moulage selon l'une des revendications 2 à 5, dans lequel lesdits points (60) d'injection latéraux sont définis par des buses orientées de manière orthogonale par rapport audit axe central (X) pour permettre audit matériau plastique fondu lors de ladite phase d'injection de pénétrer dans ladite chambre (2) de formage sous pression et dans des directions (Y) d'injection qui sont orthogonales par rapport audit axe central (X).

7. Procédé de moulage selon l'une des revendications 2 à 6, dans lequel ledit élément mâle (20) est maintenu au centre dudit élément femelle (10) et aligné par rapport audit axe central (X) par ledit matériau plastique fondu introduit sous pression dans ladite chambre (2) de formage à travers lesdits points (60) d'injection latéraux.

8. Procédé selon l'une des revendications précédentes, dans lequel chacune desdites fentes (70) présente au moins un premier segment (71) sensiblement rectiligne qui est parallèle audit axe central (X).

9. Procédé selon la revendication 8, dans lequel ladite partie inférieure (30) comprend une calotte (31) sensiblement hémisphérique et dans lequel chacune desdites fentes (70) s'étend jusqu'à ladite calotte (31) avec un deuxième segment curviligne (71) convergeant vers le (N) pôle de ladite calotte (31).

10. Procédé de moulage selon l'une des revendications 2 à 9, dans lequel chacune desdites fentes (70) s'étend à partir de la calotte (31) de ladite partie inférieure (30) avec ledit deuxième segment (72) pour poursuivre vers ledit orifice (41) d'admission avec ledit premier segment (71) au moins jusqu'à proximité de ladite section intermédiaire (50) où lesdits points (60) d'injection latéraux sont réalisés, ledit deuxième segment (72) étant relié de manière continue audit premier segment (71) pour former une fente continue.

11. Procédé de moulage selon la revendication 2, dans lequel chacune desdites fentes (70) a une forme sensiblement circulaire, coaxiale par rapport audit axe central (X), lesdites fentes se trouvant sur des plans parallèles placés à différentes hauteurs par rapport audit axe central (X) à partir de ladite calotte (31) vers ledit orifice (41) d'admission jusqu'à arriver au moins à proximité de ladite section intermédiaire (50).

12. Procédé de moulage selon la revendication 10 ou 11, dans lequel lors de ladite étape d'évacuation, l'air contenu dans ladite chambre (2) de formage entre ladite section intermédiaire (50) et ledit orifice (41) d'admission sort dudit moule (1) principalement au niveau de l'orifice (41), tandis que l'air contenu dans ladite chambre (2) de formage entre ladite section intermédiaire (50) et ladite calotte (31) sort progressivement dudit moule (1) à travers lesdites fentes (70).

13. Procédé de moulage selon l'une des revendications précédentes, dans lequel ledit matériau plastique est choisi dans le groupe comprenant du téréphtalate de polyéthylène (PET), du polyéthylène (PE), du polypropylène (PP), du polychlorure de vinyle (PVC), du polystyrène et du méthacrylate.

14. Moule permettant de former des tubes à essais de laboratoire par injection de matériau plastique fondu, utilisable en particulier dans le procédé de moulage selon l'une des revendications précédentes, comprenant :
- une chambre (2) de formage définie par un élément femelle extérieur (10) et un élément mâle intérieur (20), ladite chambre (2) possédant une extension principale le long d'un axe central (X), ledit élément femelle (10) étant muni de plusieurs points (60) d'injection latéraux pour ledit matériau plastique fondu et comprenant une partie inférieure (30) et une partie supérieure (40), dans laquelle un orifice (41) d'admission a été réalisé pour ledit élément mâle (20) ;
- une pluralité de canaux (80) d'injection réalisés sur l'élément femelle (10) à l'extérieur de ladite chambre (2) de formage, qui communiquent avec lesdits points (60) d'injection pour acheminer ledit matériau plastique fondu depuis une chambre de fusion jusqu'à ladite chambre (2) de formage ;
**caractérisé en ce que** ledit élément femelle (20) est muni d'une pluralité de fentes (70) adaptées pour permettre la sortie de l'air contenu dans la chambre (2) de formage sous la pression du matériau plastique fondu, lesdites fentes (70) étant disposées à différentes hauteurs le long dudit axe central (X), les dimensions desdites fentes permettant à la fois le passage de l'air et le blocage de l'émission dudit matériau plastique fondu en provenance dudit moule (1).

15. Moule selon la revendication 14, dans lequel chacune desdites fentes (70) a une ouverture (L) comprise entre 0,005 et 0,02 mm et est définie par deux parois opposées (102 ; 202) ayant une rugosité de surface définie comme Ra comprise entre 0,4 x 10⁻⁶ m et 6,3 x 10⁻⁶ m.

16. Moule selon la revendication 14 ou 15, dans lequel lesdits points (60) d'injection latéraux se trouvent sur un ou plusieurs plans sensiblement orthogonaux (p) par rapport audit axe central (X) dans une section intermédiaire (50) dudit élément femelle (10) compris entre ledit orifice (41) d'admission et ladite partie inférieure (30).

17. Moule selon la revendication 16, dans lequel lesdits points (60) d'injection latéraux sont réalisés à partir de ladite partie inférieure (30) et de ladite partie supérieure (40).

18. Moule selon la revendication 16 ou 17, dans lequel lesdits points (60) d'injection latéraux sont réalisés sur ledit élément femelle (10) par paires de points, opposés par rapport audit axe central (X), les deux points d'injection opposés de chaque paire se trouvant sensiblement sur le même plan orthogonal (p).

19. Moule selon la revendication 16 ou 17, dans lequel lesdits points (60) d'injection sont disposés de manière radiale par rapport audit axe central (X) à des distances angulaires régulières.

20. Moule selon l'une des revendications 14 à 19, dans lequel lesdits points (60) d'injection sont définis par des buses orientées de manière orthogonale par rapport audit axe central (X) pour permettre audit matériau plastique de pénétrer dans ladite chambre (2) de formage dans des directions (Y) d'injection qui sont orthogonales par rapport audit axe central (X) et ainsi pour permettre le centrage dudit élément mâle (20) à l'intérieur dudit élément femelle (10).

21. Moule selon l'une des revendications 14 à 20, dans lequel chacune desdites fentes (70) s'étend entre ladite partie inférieure (30) et ladite partie supérieure (40) avec au moins un premier segment (71) sensiblement rectiligne et parallèle par rapport audit axe central (X).

22. Moule selon la revendication 21, dans lequel ladite partie inférieure (30) comprend une calotte (31) sensiblement hémisphérique et dans lequel chacune desdites fentes (70) s'étend jusqu'à ladite calotte (31) avec un deuxième segment curviligne (72) convergeant vers le (N) pôle de ladite calotte (31).

23. Moule selon les revendications 16 à 22, dans lequel chacune desdites fentes (70) s'étend à partir de la calotte (31) avec ledit deuxième segment (72) pour poursuivre vers ledit orifice (41) d'admission avec ledit premier segment (71) au moins jusqu'à proximité de ladite section intermédiaire (50), ledit deuxième segment (72) étant relié de manière continue audit premier segment (71) pour former une fente continue.

24. Moule selon l'une des revendications 14 à 20, dans lequel chacune desdites fentes (70) a une forme sensiblement circulaire, coaxiale par rapport audit axe central (X), lesdites fentes se trouvant sur des plans parallèles placés à différentes hauteurs par rapport audit axe central (X) à partir de ladite calotte (31) vers ledit orifice (41) d'admission.

25. Moule selon l'une des revendications 14 à 23, dans lequel ladite partie inférieure (30) est formée par au moins une première (100) et une deuxième (200) séries de sections reliées respectivement à une première (110) et une deuxième (210) bases de support de forme complémentaire pour permettre un couplage mutuel, les sections (101) de ladite première série alternant avec lesdits coins (201) de ladite deuxième série, lesdites fentes (70) étant définies dans les zones d'interface entre les sections (100) de ladite première série et les sections (200) de ladite deuxième série.
